# FASCICULE DE BREVET EUROPEEN

(11) **EP 1 382 527 B1**
(45) Date de publication et mention de la délivrance du brevet: **05.03.2008**
(21) Numéro de dépôt: 03291544.9
(22) Date de dépôt: 24.06.2003
(51) Int. Cl.: B64C 29/00

(54) **Boite de transmission de puissance basculante a transfert de charge par le carter**
Schwenkbares Getriebe mit Lastübertragung durch das Gehäuse
Tilting power transmission box with load transfer through the housing

(30) Priorité: 15.07.2002 FR 0208896
(43) Date de publication de la demande: 21.01.2004
(73) Titulaire: EUROCOPTER, 13725 Marignane Cédex (FR)
(72) Inventeur: Thomassey, Lionel, 13270 Fos sur Mer (FR); Sandrart, Thierry, 13880 Velaux (FR)
(74) Mandataire: Renaud-Goud, Thierry

(56) Documents cités:
- US-A- 4 431 148
- US-A- 5 823 470
- US-B1- 6 260 793

## Description

L'invention concerne une boîte de transmission de puissance basculante, du type comportant un carter basculant autour d'un axe de basculement sur un support non-basculant, et dans lequel le carter comprend un fond de carter, qui enveloppe au moins un étage de pignons de la boîte de transmission, et par lequel le carter est monté basculant sur le support par deux paliers coaxiaux autour de l'axe de basculement et espacés l'un de l'autre le long de ce dernier axe, chaque palier comportant une partie fixe, solidaire du support, et une partie pivotante, solidaire du fond de carter, et montée tourillonnante sur la partie fixe correspondante autour de l'axe de basculement, le carter comprenant également un haut de carter, assemblé au fond de carter, et dans lequel un arbre d'entraînement, relié en rotation audit étage de pignons, est monté rotatif autour d'un axe de rotation sensiblement perpendiculaire à l'axe de basculement et basculant avec le carter autour de l'axe de basculement, l'arbre d'entraînement étant axialement retenu par au moins un palier de butée dans une partie de forme générale externe convergente du haut de carter, qui converge vers une extrémité de l'arbre d'entraînement en saillie hors du carter et liée en rotation à un rotor.

La boîte de transmission de puissance basculante selon l'invention peut être utilisée, de manière non limitative, comme boîte de transmission de puissance équipant des aéronefs dont le système de propulsion est orientable, tels que ballons dirigeables, ou encore comme boîte de transmission de puissance équipant des éoliennes.

D'une manière générale, la boîte de transmission de puissance basculante selon l'invention est utilisable dans tous les systèmes orientables de propulsion ou de génération d'énergie par rotation qui nécessitent, pour leur bon fonctionnement, une bonne connaissance des déformations des carters des boîtes de transmission sous chargement, afin d'optimiser les portées et zones de contacts sur les pignons qui sont logés dans le carter basculant des boîtes de transmission correspondantes.

En particulier, à titre d'application pour laquelle une boîte de transmission de puissance basculante selon l'invention présente un grand intérêt pour la Demanderesse, une telle boîte de transmission peut être utilisée pour l'entraînement en rotation, à partir d'au moins un groupe motopropulseur, par exemple du type turbomoteur, d'au moins un rotor basculant d'un aéronef du type dit convertible, pouvant opérer en mode avion ou en mode hélicoptère, et dont l'arbre d'entraînement du rotor pivote autour d'un axe de basculement, de sorte à pouvoir passer d'une position dans laquelle le rotor fonctionne comme une hélice d'avion, pour le vol en mode avion de l'aéronef, à une position dans laquelle le rotor fonctionne comme un rotor sustentateur d'hélicoptère, pour le vol en mode hélicoptère de l'aéronef.

Une boîte de transmission de puissance basculante du type présenté ci-dessus est décrite notamment dans la demande de brevet français FR 01 14392, dans son application à l 'équipement d'un aéronef convertible à rotors basculants, en particulier tel que décrit notamment dans les brevets français FR 2 791 319 et FR 2 791 634, auxquels on se reportera pour davantage de précisions à ce sujet, et qui comportent les caractéristiques du préambule de la revendication 1.

On rappelle cependant que ces deux brevets décrivent un aéronef convertible à rotors basculants, du type dans lequel l'arbre de chaque rotor (qui est un arbre d'entraînement saillant d'une boîte de transmission de puissance basculante) est entraîné en rotation sur lui-même par un ensemble réducteur avant de l'une respectivement de deux transmissions de puissance comportant chacune également un ensemble réducteur arrière, relié à l'ensemble réducteur avant correspondant, ainsi qu'à l'un respectivement de deux moteurs (turbomoteurs), supportés chacun par l'une respectivement des deux ailes fixes de l'aéronef, et à un arbre d'interconnexion reliant les deux transmissions pour l'entraînement en rotation des deux rotors par l'un quelconque des deux moteurs, en cas de défaillance de l'autre moteur.

L'arbre d'entraînement de chaque rotor, la transmission de puissance correspondante et le moteur correspondant sont logés dans l'une respectivement de deux nacelles articulées, comportant chacune une partie avant montée basculante, autour de l'axe de basculement, sur une partie arrière fixe par rapport à l'aéronef, et fixée à l'une respectivement des deux ailes de l'aéronef, et dans laquelle sont logés le moteur correspondant et au moins en partie l'ensemble réducteur arrière de la transmission correspondante, dont l'ensemble réducteur avant, réalisé comme une boîte de transmission principale d'hélicoptère, ainsi que l'arbre du rotor correspondant sont logés dans la partie avant basculante de nacelle, et sont montés basculants avec cette partie avant par rapport à la partie arrière fixe de nacelle et l'aile fixe correspondante.

Sur un hélicoptère, il est connu de reprendre la portance d'un rotor principal par un ensemble de barres de suspension, assurant la suspension, sur la structure de l'hélicoptère, d'une boîte de transmission principale montée entre le ou les moteurs d'entraînement du rotor principal et ce dernier, cet ensemble de barres de suspension comportant au moins trois, et en général quatre, barres rigides, sensiblement rectilignes, réparties autour de la boîte de transmission principale et inclinées les unes vers les autres et vers l'axe de rotation de l'arbre du rotor, du côté de leurs extrémités supérieures par lesquelles les barres de suspension sont articulées sur la partie supérieure du carter de la boîte de transmission principale, qui comprend également une partie inférieure de carter fixée à la partie supérieure du carter, tandis que les barres de suspension sont solidaires de la structure de l'hélicoptère par leurs extrémités inférieures, articulées sur des ferrures solidaires du plancher mécanique de cette structure.

L'assemblage rigide des parties supérieure et inférieure du carter l'une à l'autre est assuré par une couronne de goujons filetés solidarisant simultanément au carter une roue dentée périphérique externe d'un train épicycloïdal, constituant un étage de sortie d'un ensemble réducteur basculant logé dans le carter, et tel que le porte-satellites du train épicycloïdal est solidaire en rotation, autour de l'axe de rotation du rotor, de l'arbre d'entraînement monté en rotation dans la partie supérieure du carter par des paliers à roulement, dont un palier de butée retenant axialement l'arbre d'entraînement dans la partie supérieure du carter, tandis que le pignon planétaire du train épicycloïdal est solidaire en rotation d'une roue dentée conique ou spiro-conique en prise avec un pignon d'entrée conique ou spiro-conique d'un couple conique, constituant un autre étage réducteur logé dans la partie inférieure du carter, et tel que l'arbre du pignon d'entrée conique est entraîné à partir du ou des moteurs.

Dans une telle architecture, tous les efforts et moments de flexion appliqués au sommet de l'arbre d'entraînement du rotor transitent par l'ensemble des pignons et autres éléments dentés logés dans le carter. Les déformations du carter sous ces charges doivent donc être exactement connues, afin que les portées et zones de contact sur les couples coniques ou spiro-coniques puissent être optimisées.

Sur un hélicoptère, ce problème peut être résolu, puisque le rotor principal occupe toujours la même position.

Par contre, sur un aéronef convertible, chaque rotor basculant peut prendre un grand nombre de positions différentes autour de l'axe de basculement, de l'une à l'autre des configurations avion et hélicoptère. A chaque position, il correspond un type de déformation des éléments dentés des étages de transmission logés dans le carter, et l'optimisation des zones de contact de ces éléments dentés, et en particulier des couples coniques ou spiro-coniques, s'en trouve d'autant plus compliquée.

Cet inconvénient est rencontré sur les boîtes de transmission de puissance basculante selon la demande de brevet français et les deux brevets français précités.

Le problème à la base de l'invention est de remédier à cet inconvénient, et de diminuer autant que possible les efforts, et donc les déformations, dans les éléments dentés de la chaîne cinématique contenue dans la boîte de transmission de puissance basculante, et de sorte à obtenir un gain en masse et une maintenance plus économique.

A cet effet, l'invention propose une boîte de transmission de puissance basculante du type présenté ci-dessus, et qui se caractérise en ce que le haut de carter coopère avec un agencement de transfert audit support d'au moins une charge de traction axiale s'exerçant sur ledit arbre d'entraînement, par l'intermédiaire desdits paliers de basculement.

Avec cette architecture de boîte de transmission de puissance, afin de réduire très substantiellement les efforts, et donc les déformations, dans les pignons de la chaîne cinématique enveloppée dans la boîte de transmission de puissance basculante, il est proposé, par l'invention, que le carter basculant de la boîte de transmission de puissance de l'invention reprenne les efforts de portance s'exerçant sur le rotor correspondant, en mode hélicoptère, et/ou les efforts de traction, s'exerçant sur le rotor en mode avion, lesquels efforts de portance et/ou de traction correspondent à une charge de traction axiale sur l'arbre d'entraînement de chaque rotor, et les transfère directement à la structure de l'aéronef convertible, ou plus généralement, à la structure solidaire du support sur lequel le carter de la boîte de transmission est monté basculant.

Pour une application aux éoliennes et aux aéronefs convertibles à rotors basculants, l'invention propose une boîte de transmission de puissance basculante dont le carter permet de plus de transférer les efforts dûs au torseur appliqué à l'extrémité de l'arbre d'entraînement liée au moyeu du rotor, directement sur la structure porteuse et non sur les éléments (pignons et roues dentées) constituant la chaîne cinématique logée dans la boîte de transmission.

Dans un premier mode de réalisation, ledit agencement de transfert au support d'au moins la charge axiale s'exerçant sur l'arbre d'entraînement comprennent un ensemble d'au moins trois barres de suspension, par lequel le carter basculant est suspendu sur les parties pivotantes des deux paliers de basculement, les barres de suspension étant rigides, sensiblement rectilignes, inclinées sur l'axe de rotation de sorte à converger les unes vers les autres et vers ledit axe de rotation par leurs extrémités tournées vers ledit rotor, et réparties autour dudit axe de rotation, chacune desdites barres de suspension étant articulée, par une première extrémité, sur ladite partie convergente du haut de carter, et, par sa seconde extrémité, sur l'une desdites parties pivotantes desdits paliers.

Avec une telle réalisation, les efforts de portance, en configuration hélicoptère, ou les efforts de traction, lorsque le rotor fonctionne en hélice, en configuration avion, transitent de l'arbre d'entraînement du rotor au support non basculant, et donc à la structure porteuse, par l'intermédiaire des parties pivotantes des paliers de basculement, constituant la liaison pivotante entre la boîte de transmission de puissance et la structure porteuse, mais les efforts tranchants et les moments de flexion appliqués sur l'extrémité de l'arbre d'entraînement liée au moyeu du rotor transitent toujours par la pignonnerie logée dans la boîte de transmission.

Afin de ne pas perturber l'agencement interne de la boîte de transmission, dans son carter, les barres de suspension s'étendent avantageusement à l'extérieur dudit carter basculant, chacune entre une attache en saillie vers l'extérieur sur ladite partie convergente dudit haut de carter, et une attache d'articulation sur la partie pivotante correspondante d'un palier.

Compte tenu de ce que l'ensemble des barres assure la suspension du carter basculant sur les parties pivotantes des deux paliers de basculement, il est avantageux que cet ensemble de barres de suspension comprenne quatre barres groupées en deux paires de barres, dont chaque paire a ses deux barres articulées à l'une respectivement des deux parties pivotantes de palier, chaque partie pivotante comportant deux oreilles en saillie sensiblement radiales par rapport à l'axe de basculement et s'étendant de part et d'autre d'un plan passant par les axes de rotation et de basculement, et sur chacune desdites oreilles s'articule l'une respectivement des deux barres de la paire de barres correspondante, selon une réalisation avantageusement symétrique par rapport à un plan passant par l'axe de rotation et perpendiculaire à l'axe de basculement.

Avantageusement de plus, pour une meilleure distribution des efforts qui transitent par les barres de suspension et leurs liaisons aux parties pivotantes des paliers, les points d'articulation de deux barres de suspension sur une même partie pivotante de palier sont sensiblement diamétralement opposés par rapport à l'axe de basculement, et chaque barre de suspension est articulée au moins à pivotement autour d'un axe perpendiculaire à un plan diamétral passant par l'axe de rotation, à chacune de ses deux articulations.

Une telle réalisation, dans laquelle le transit de la portance ou de la traction s'effectue par les barres de suspension et les paliers de basculement vers la structure porteuse, permet de conserver un assemblage rigide du haut de carter sur le fond de carter en même temps que se trouve assurée la fixation d'un élément denté de la pignonnerie interne au carter, comme cela est connu et présenté ci-dessus dans les boîtes de transmission principale d'hélicoptère. Ainsi, dans la boîte de transmission selon l'invention, au moins un étage de pignons de cette boîte peut être avantageusement au moins partiellement enveloppé par ledit fond de carter et comporter une couronne dentée externe périphérique, fixée à l'intérieur dudit fond de carter par des éléments de fixation, du type goujons filetés, solidarisant le haut et le fond de carter l'un à l'autre, en particulier lorsque la couronne dentée externe périphérique est celle d'un train épicycloïdal monté comme étage réducteur de sortie pour l'entraînement de l'arbre du rotor, dans la boîte de transmission selon l'invention.

Ce premier mode de réalisation, avec des barres de suspension, nécessite un temps de montage relativement important, car les barres doivent être parfaitement réglées, et le dispositif, dans son ensemble, est relativement massif, du fait de la masse des barres et de la masse des oreilles de fixation des parties pivotantes des paliers.

Afin d'éliminer ces inconvénients, ainsi que d'obtenir un transfert d'efforts qui ne se limite pas à la portance ou à la traction, mais concerne également les moments et efforts tranchants en tête de l'arbre d'entraînement, l'invention propose un deuxième mode de réalisation du carter dans lequel l'agencement de transfert au support d'au moins la charge axiale appliquée à l'arbre d'entraînement comprend une jupe qui prolonge le haut de carter du côté opposé au rotor et à l'extérieur dudit fond de carter, la jupe présentant au moins deux portions en arcs cylindriques, coaxiaux autour dudit axe de basculement et fixées chacune à l'une respectivement des parties pivotantes des paliers, ledit haut de carter étant monté sur ledit fond de carter par une liaison rotulée lui permettant de rotuler autour de la zone dudit fond de carter définissant son maître couple, perpendiculairement audit axe de rotation, ledit fond de carter étant également fixé auxdites parties pivotantes des paliers.

Avec cette architecture, on assure un découplage entre le haut de carter et le fond de carter, car le haut de carter n'est plus rigidement assemblé au fond de carter dans la zone du maître couple de ce dernier, mais peut au contraire rotuler avec une amplitude limitée sur le fond de carter, lequel est toujours fixé aux parties pivotantes des paliers, auxquelles la jupe du haut de carter est elle-même fixée par ses portions en arc cylindrique, au niveau desquelles transitent les efforts tranchants et les moments de flexion, ainsi transférés directement par le haut de carter et sa jupe dans les parties pivotantes des paliers, et donc aux parties fixes desdits paliers, et ainsi au support non-basculant et à la structure porteuse, sans transiter par la pignonnerie à l'intérieur du carter.

Ainsi, de part sa structure et sa forme, le haut de carter, avec sa partie convergente prolongée par sa jupe autour du fond de carter, intègre les fonctions remplies, dans le mode de réalisation précédent, par les barres de suspension, et remplit la fonction supplémentaire de transférer directement vers la structure, les efforts venant de l'arbre d'entraînement du rotor. De cette manière, tous les efforts sollicitant l'arbre du rotor ne transitent plus par la pignonnerie contenue dans le carter de la boîte de transmission, ce qui diminue considérablement les déformations des éléments dentés de cette pignonnerie, de sorte que l'optimisation des portées des dentures s'en trouve grandement facilitée.

En plus de la diminution considérable des efforts, et donc des déformations dans la chaîne cinématique logée dans la boîte de transmission de puissance, le fond de carter de cette boîte ne reprend que du couple, tandis que le haut de carter, qui transfère les efforts, reste néanmoins plus léger que le haut de carter associé à l'ensemble des barres de suspension et aux oreilles de fixation sur les parties pivotantes des paliers du premier mode de réalisation précité.

Avantageusement, dans le second mode de réalisation, ladite liaison rotulée comprend un joint souple périphérique, du type joint d'étanchéité, de préférence torique, monté dans une gorge annulaire, ouverte radialement vers l'extérieur et pratiquée dans ledit fond de carter autour de sa partie de plus grand diamètre externe, et ledit joint souple est maintenu en contact avec ledit haut de carter, contre une portée annulaire cylindrique de section transversale circulaire, perpendiculairement audit axe de rotation, délimitée, radialement vers l'extérieur du joint souple par rapport à l'axe de rotation, sur la face interne dudit haut de carter.

Par sa souplesse, le joint permet un léger rotulage du haut de carter sur le fond de carter.

En outre, ladite liaison rotulée peut simultanément assurer sensiblement une étanchéité entre lesdits fond et haut de carter, ce qui est le cas avec le joint souple précité.

Dans une forme de réalisation préférée, ladite jupe du haut de carter peut comprendre quatre portions en arcs cylindriques coaxiaux, formant deux paires de pieds cintrés en regard l'un de l'autre, et tels que pour chaque paire, les deux pieds correspondant sont fixés à ladite partie pivotante de l'un respectivement des deux paliers, de part et d'autre d'un plan passant par les axes de rotation et de basculement.

Ainsi, le haut de carter peut présenter une forme générale très favorable au transfert desdits efforts ainsi qu'à sa coopération avec le fond de carter, dans la mesure où sa partie convergente peut présenter une forme globale tronconique, dont la section circulaire, du côté du rotor, évolue progressivement, dans la jupe, vers une section sensiblement carrée à sommets et/ou côtés arrondis et bombés vers l'extérieur, la jupe du haut de carter présentant ainsi sensiblement une forme générale externe de tronc de pyramide renversé, dont l'extrémité tournée vers l'axe de basculement se termine, comme présenté ci-dessus, par les quatre pieds cintrés, qui peuvent être fixés aux parties pivotantes des paliers pour le transfert des efforts tranchants et moments de flexion.

A cet effet, chaque pied en arc cylindrique est de préférence fixé à la partie pivotante correspondante par un ensemble d'organes de fixation, tels que des goujons filetés ou vis, répartis le long dudit pied et sur une portion de la périphérie de ladite partie pivotante.

Afin que ces pieds présentent une rigidité suffisante, ils présentent avantageusement une section en forme de cornière à deux ailes à angle sensiblement droit, de sorte que chaque pied en arc cylindrique peut avantageusement présenter, sur l'une des ailes, une face de fixation qui est tournée vers l'extérieur de ladite jupe et en forme sensiblement de portion de couronne annulaire radiale par rapport à l'axe de basculement et coaxiale autour dudit axe de basculement, et par laquelle ledit pied est fixé par ledit ensemble d'organes de fixation, orientés sensiblement selon l'axe de basculement, sur ladite partie pivotante correspondante.

En outre, pour permettre avantageusement la liaison de chaque partie pivotante d'un palier, d'une part, aux deux pieds correspondants de la jupe du haut de carter, et, d'autre part, au fond de carter, chaque partie pivotante comprend avantageusement un manchon tourillonnant autour de la partie fixe correspondante du palier correspondant, et supportant une bride de fixation, en saillie radiale vers l'extérieur par rapport à l'axe de basculement, par laquelle ladite partie pivotante est, d'une part, en appui et fixée par une couronne d'organes de fixation, tels que des goujons filetés ou vis, contre l'une respectivement de deux couronnes annulaires, délimitées en position diamétralement opposée par rapport à l'axe de rotation sur ledit fond de carter et radiales et coaxiales autour de l'axe de basculement, pour fixer ladite partie pivotante audit fond de carter, et, d'autre part, en appui et fixée par chacun de deux ensembles d'organes de fixation contre chacun respectivement des pieds de l'une respectivement desdites paires de pied de ladite jupe, pour fixer ladite partie pivotante audit haut de carter, radialement à l'extérieur des organes de fixation audit fond de carter.

Dans ce deuxième mode de réalisation, en raison du rotulage du haut de carter sur le fond de carter, lorsque ce dernier enveloppe une couronne dentée périphérique externe d'un étage de pignons de la boîte de transmission, ladite couronne dentée est fixée par un ensemble d'organes de fixation filetés audit fond de carter, sans être fixée audit haut de carter.

On peut ainsi conserver l'architecture de l'ensemble réducteur logé dans le fond de carter, avec deux étages, dont le premier, ou étage d'entrée, comporte un couple conique ou spiro-conique dont le pignon conique d'entrée est entraîné en rotation par son arbre autour de l'axe de basculement, tandis que la roue conique ou spiro-conique de sortie de ce premier étage est liée en rotation au planétaire du deuxième étage, réalisé sous la forme d'un étage épicycloïdal dont la roue dentée périphérique externe est solidarisée au seul fond de carter, comme indiqué ci-dessus.

Dans les deux modes de réalisation précités, la partie convergente du haut de carter peut, dans une forme de réalisation éventuellement avantageuse pour le profilage aérodynamique du carter et de la nacelle motrice correspondante, être une partie de carter sensiblement tronconique, ou, en variante, une partie de carter en forme sensiblement de tronc de pyramide de section transversale, perpendiculairement audit axe de rotation, sensiblement quadrangulaire à côtés et/ou sommets arrondis à concavité tournée vers l'axe de rotation, comme cela est avantageusement le cas également de la jupe du haut de carter, dans le second mode de réalisation.

Selon la présente invention, on propose également un aéronef convertible comprenant au moins un rotor basculant, mobile entre une première position, dans laquelle ledit au moins un rotor basculant fonctionne comme une hélice d'avion, et une seconde position, dans laquelle ledit au moins un rotor basculant fonctionne comme un rotor principal sustentateur d'hélicoptère, comprenant au moins une boîte de transmission de puissance basculante telle que définie ci-dessus pour l'entraînement du rotor basculant.

D'autres caractéristiques et avantages de l'invention découleront de la description donnée ci-dessous, à titre non limitatif, d'exemples de réalisation décrits en référence aux dessins annexés sur lesquels :
- la figure 1 représente schématiquement, en partie en élévation latérale et en partie en coupe axiale, un exemple de boîte de transmission de puissance basculante équipée de barres de suspension, pour l'entraînement en rotation d'un rotor basculant d'aéronef convertible, la boîte de transmission étant représentée en configuration hélicoptère,
- la figure 2 est une vue analogue à la figure 1 représentant la boîte de transmission de puissance basculante en configuration avion,
- la figure 3 est une représentation schématique d'un second exemple de boîte de transmission de puissance basculante, sans barre de suspension, également pour l'équipement d'un aéronef convertible à rotors basculants,
- la figure 4 est une vue en coupe selon IV-IV de la figure 3,
- la figure 5 est une vue schématique en perspective du fond de carter de la boîte de transmission de la figure 3,
- la figure 6 est une vue analogue à la figure 5 du haut de carter de la boîte de transmission de la figure 3, et
- la figure 7 est une représentation partielle schématique de la boîte de transmission des figures 3 à 6.

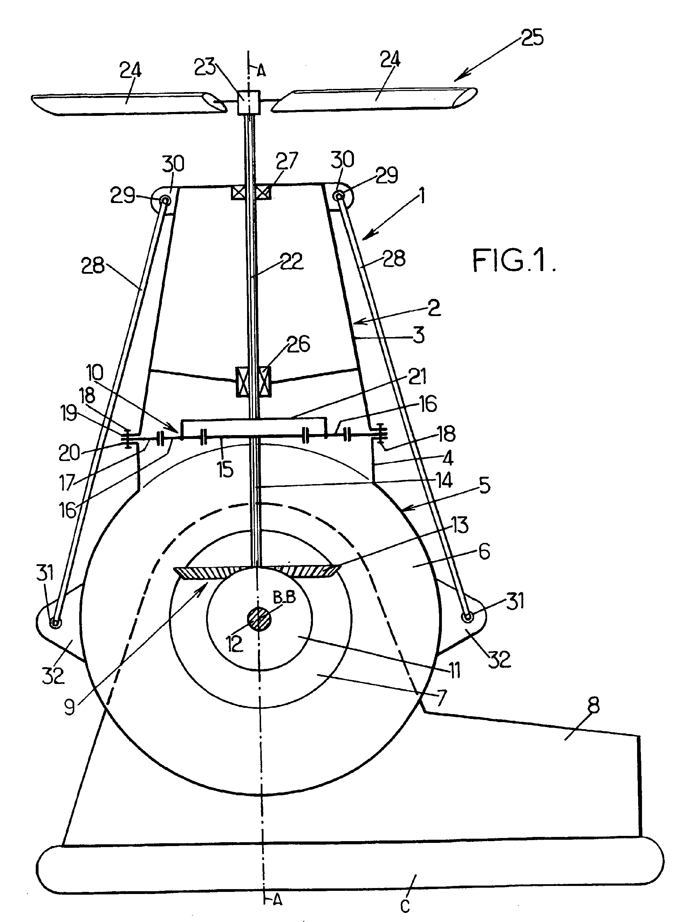

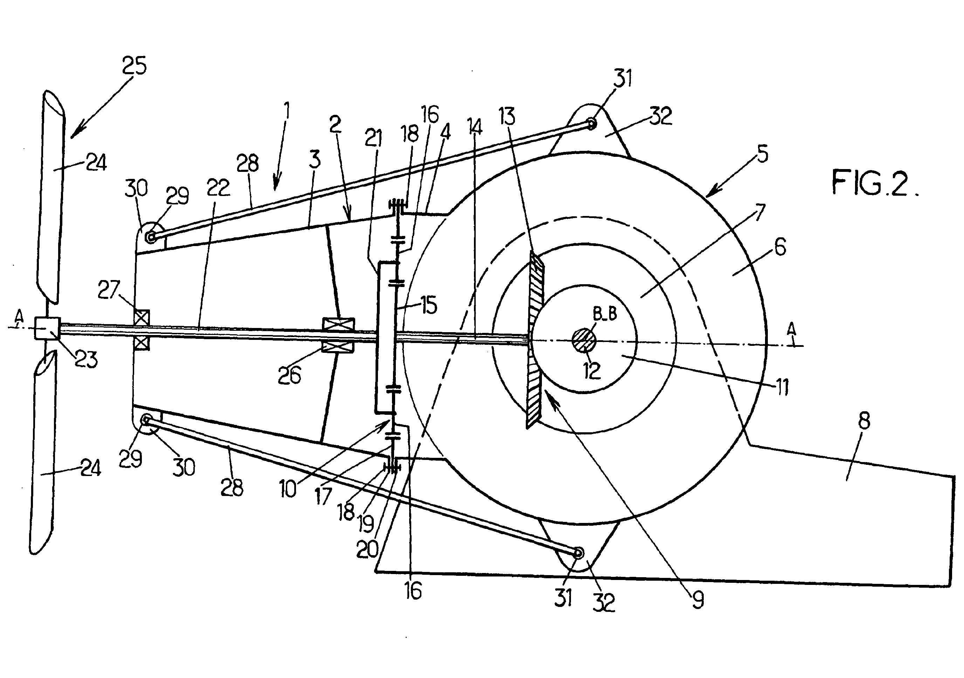

Dans l'exemple des figures 1 et 2, la boîte 1 de transmission de puissance basculante, pour l'entraînement d'un rotor basculant d'un aéronef convertible (représenté schématiquement en C sur la figure 1), comprend un carter 2 essentiellement constitué par l'assemblage de deux parties l'une à l'autre, dont un haut de carter 3 et un fond de carter 4, par lequel l'ensemble du carter 2, et donc la boîte de transmission 1, est monté basculant autour d'un axe de basculement B-B (perpendiculaire au plan des figures 1 et 2) par deux paliers de basculement, axialement espacés le long de l'axe B-B, et dont un seul est schématiquement représenté en 5.

Chaque palier 5 comprend une partie tournante 6 montée tourillonnante autour d'une partie fixe 7 cylindrique, coaxiale à la partie fixe 7 de l'autre palier 5, et solidaire d'un support 8 rigide non basculant, fixé à la structure de la partie arrière d'une nacelle motrice correspondante et à la structure d'une aile fixe de l'aéronef convertible, comme décrit dans les brevets précités.

Le fond de carter 4 est disposé axialement entre les deux parties tournantes 6 des paliers 5 coaxiaux, et solidarisé, par exemple par boulonnage, à ces parties tournantes 6, pour le montage pivotant du carter 2 sur le support 8 autour de l'axe de basculement B-B.

Le carter basculant 2 loge un ensemble réducteur de la boîte de transmission basculante 1, et cet ensemble réducteur est représenté, sur les figures 1 et 2, comme étant constitué, de manière connue, d'un module ou étage d'entrée 9 et d'un module ou étage de sortie 10, qui sont montés, pour le premier, entièrement dans le fond du carter 4, et, pour le second, en partie dans le fond de carter 4 et en partie dans le haut de carter 3, dans la zone de liaison de ces deux parties 3 et 4 du carter 2.

L'étage d'entrée 9 est constitué d'un couple conique ou spiro-conique comportant un pignon d'entrée 11, entraîné en rotation autour de l'axe de basculement B-B par un arbre d'entraînement 12 coaxial au pignon 11 autour de l'axe B-B, et par une roue conique 13, en prise avec le pignon 11, et solidaire en rotation d'un arbre de transmission 14, autour d'un axe de rotation perpendiculaire à l'axe B-B.

L'étage de sortie 10 est un étage épicycloïdal, dont un pignon planétaire 15 est solidaire en rotation coaxiale de l'arbre 14, autour de l'axe de ce dernier, et en prise avec des pignons satellites 16, également en prise avec la denture interne d'une couronne dentée périphérique externe 17, solidarisée au carter 2 par une couronne d'organes de fixation 18, tels que des vis ou boulons, qui solidarisent rigidement l'une à l'autre deux brides de fixation en regard, entre lesquelles s'étend la périphérie radiale externe de la couronne 17, et qui sont ménagées l'une 19 sur la base du haut de carter 3 qui est tournée vers le fond de carter 4, et l'autre 20 sur le bord du fond de carter 4 qui est tourné vers le haut de carter 3. Ces organes de fixation 18 assurent ainsi simultanément la fixation rigide, par les brides 19 et 20, du haut de carter 3 sur le fond de carter 4, et la fixation rigide de la couronne dentée externe 17 de l'étage épicycloïdal 10 dans le carter 2. L'étage 10 comprend également un porte-satellites 21, solidaire en rotation de la base d'un arbre d'entraînement 22, ou mât rotor, dont l'extrémité opposée à la base est solidaire en rotation du moyeu 23 lié aux pales 24 d'un rotor 25 monté ainsi basculant avec la boîte de transmission 1 autour de l'axe de basculement B-B. Le mât rotor 22 est guidé en rotation autour de son axe, dans le prolongement de l'axe de l'arbre 14, et à l'intérieur du haut de carter 3, par des paliers à roulements 26 et 27, dont l'un 27, à l'extrémité du haut de carter 3 située du côté du rotor 25, est un palier de butée, reprenant les efforts axiaux s'exerçant sur le mât 22, du fait de la portance sur les pales 24 du rotor 25, en configuration hélicoptère (figure 1), ou de la traction exercée par le rotor 25 fonctionnant comme une hélice, en configuration avion (figure 2), et transférant ces efforts axiaux au haut de carter 3.

Le rotor 25 est ainsi rotatif autour d'un axe de rotation A-A, qui est l'axe commun aux arbres d'entraînement 14 et 22, et donc sensiblement perpendiculaire à l'axe de basculement B-B, et bascule avec le carter 2 autour de ce dernier axe. Le mât rotor 22 est ainsi monté rotatif et axialement retenu dans le haut de carter 3, de forme générale externe tronconique, qui converge vers l'extrémité libre du mât rotor 22, faisant saillie hors du carter 2 et liée au rotor 25.

Afin que les efforts de portance et de traction sollicitant le mât rotor 22 ne transitent pas par l'ensemble des pignons et roues dentées de l'ensemble réducteur logé dans la boîte de transmission 1, le haut de carter 3 coopère avec un agencement de transfert de ces efforts au support 8, par l'intermédiaire des paliers de basculement 5, et dans l'exemple des figures 1 et 2, ces moyens de transfert comportent essentiellement un ensemble de quatre barres 28 rigides de suspension du carter basculant 2 sur les parties pivotantes 6 des deux paliers de basculement 5, deux barres de suspension 28 seulement étant visibles sur les figures 1 et 2.

Ces barres 28, dont deux sont situées du côté de l'un des paliers 5, et les deux autres du côté de l'autre palier 5, sont des barres sensiblement rectilignes, inclinées sur l'axe de rotation A-A du rotor 25, de sorte à converger les unes vers les autres et vers cet axe A-A par leurs extrémités tournées vers le rotor 25, et ces quatre barres 28 sont réparties autour de l'axe de rotation A-A, et articulées, chacune, par un embout à rotule 29 à une première extrémité, sur des oreilles 30 fixées, en saillie radiale (par rapport à l'axe A-A) vers l'extérieur sur l'extrémité du haut de carter 3 située du côté du rotor 25, et, par un autre embout à rotule 31 à son autre extrémité, sur l'une de deux oreilles de fixation 32 en saillie radiale externe sur la partie tournante 6 du palier de basculement 5 correspondant, ces deux oreilles 32 étant symétriques l'une de l'autre par rapport au plan défini par les deux axes A-A et B-B, et ces deux oreilles 32 étant de préférence diamétralement opposées par rapport à l'axe de basculement B-B.

Les barres de suspension 28 s'étendent ainsi à l'extérieur du carter basculant 2, chacune entre une attache en saillie vers l'extérieur et définie par une ou deux oreilles de fixation 30 correspondantes sur l'extrémité resserrée du haut de carter 3, vers le rotor 5, et une attache d'articulation sur la partie pivotante 6 du palier 5 correspondant, par l'oreille 32 correspondante, qui peut éventuellement être double ou conformée en chape dans laquelle est retenue la rotule de l'embout correspondant de la barre 28.

Ce montage permet d'obtenir que les points d'articulation des barres 28 de chacune des deux paires de barres associées respectivement à la partie pivotante 6 de l'un respectivement des paliers 5 sont sensiblement diamétralement opposés par rapport à l'axe de basculement B-B.

Du fait de sa liaison aux oreilles de fixation 30 et 32 par des embouts à rotule respectivement 29 et 31, chaque barre de suspension 28 se trouve articulée au moins à pivotement autour d'un axe qui est perpendiculaire au plan diamétral local passant par l'axe de rotation A-A du rotor 25 et par le centre de la rotule à chacune des deux articulations au niveau des embouts à rotule 29 et 31.

Avec une telle réalisation, les efforts de traction ou de portance sollicitant le mât rotor 22 sont introduits, par le palier de butée 27, dans la partie du haut de carter 3 la plus resserrée, qui porte les oreilles de fixation 30, par lesquelles ces efforts sont introduits dans les barres de suspension 28 et transmis, par les oreilles 32, aux parties pivotantes 6 des deux paliers de basculement 5, dont les parties fixes 7, sur lesquelles tourillonnent les parties pivotantes 6, transmettent ces efforts au support 8 et donc à la structure porteuse.

Par contre, les efforts tranchants et moments de flexion appliqués en tête du mât rotor 22 transitent toujours par les pignons et roues dentées des étages réducteurs de la boîte de transmission basculante 1.

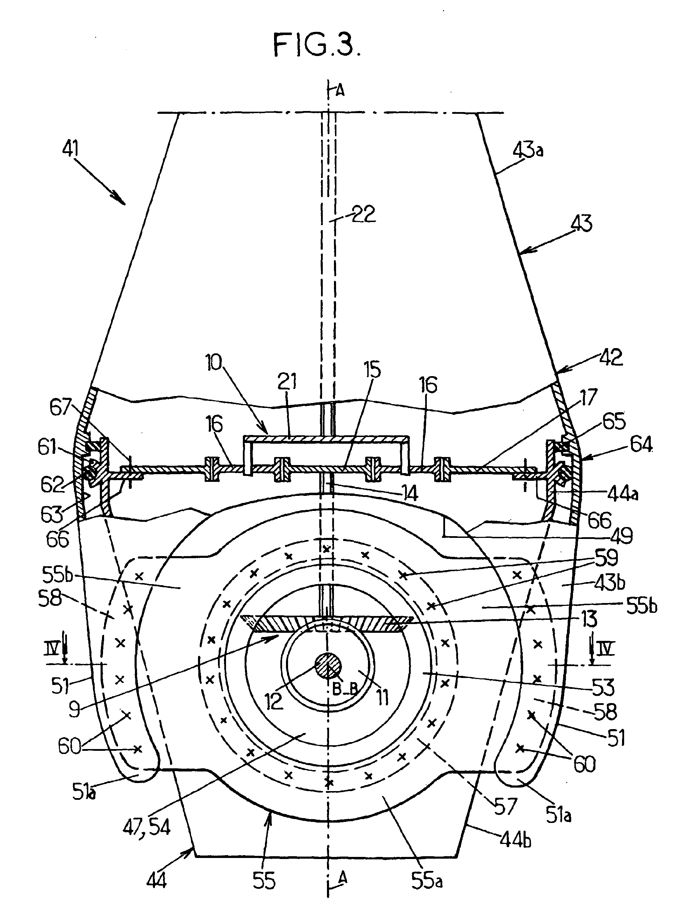

Le second exemple de boîte de transmission de puissance basculante, représenté sur les figures 3 à 7, permet non seulement de ne pas faire transiter les efforts de portance et de traction par les pignons et roues dentées des étages de transmission de la boîte de transmission de puissance basculante, mais procure en plus le même avantage pour les moments et efforts tranchants, appliqués en tête du mât rotor, et qui sont transmis, tout comme la portance ou la traction, à la structure par des moyens de transfert coopérant avec le haut de carter, sans cependant comporter de barre de suspension, donc sans avoir à subir les pénalisations en masse, du fait de la présence des barres de suspension ainsi que des oreilles de fixation, et en temps de montage, du fait que de telles barres de suspension doivent être parfaitement réglées en longueur.

La boîte de transmission basculante 41 des figures 3 à 7, qui comporte également un ensemble réducteur constitué, comme dans l'exemple des figures 1 et 2, d'un module ou étage d'entrée 9 à couple conique ou spiro-conique et d'un module ou étage de sortie 10 qui est un étage épicycloïdal (de sorte que les composants de cet ensemble réducteur sont repérés sur les figures 3 à 7 par les mêmes références numériques que sur les figures 1 et 2), comprend également un carter 42 essentiellement constitué d'un haut de carter 43 assemblé à un fond de carter 44.

Comme visible sur les figures 3, 5 et 7, le fond de carter 44 présente une forme générale externe cyclindro-conique, avec une partie d'extrémité ouverte cylindrique 44a, tournée vers le haut de carter 43 et vers le rotor, non représenté sur les figures 3 à 7, mais constitué comme sur les figures 1 et 2 et entraîné en rotation par l'arbre d'entraînement ou mât rotor 22 solidaire en rotation du porte-satellites 21 de l'étage de sortie épicycloïdal 10. Cette partie d'extrémité ouverte cylindrique 44a du fond de carter 44 se prolonge, du côté opposé au rotor, c'est-à-dire vers le bas sur les figures 3, 5 et 7, par une partie tronconique 44b convergente du côté opposé au rotor.

A noter que, dans l'exemple des figures 1 et 2, le fond de carter 4 peut présenter la même forme que le fond de carter 44 des figures 3 à 7.

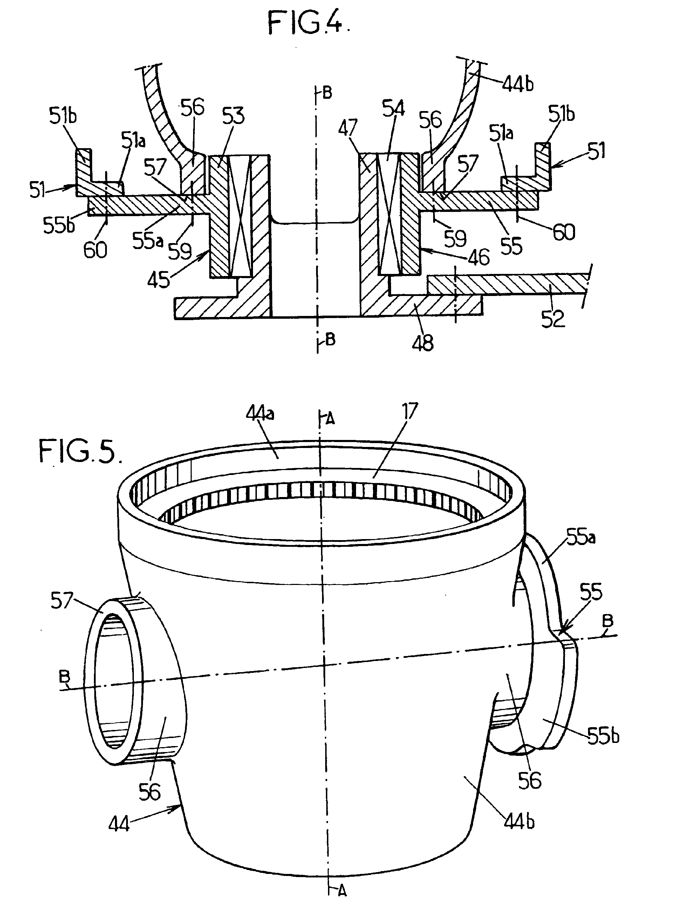

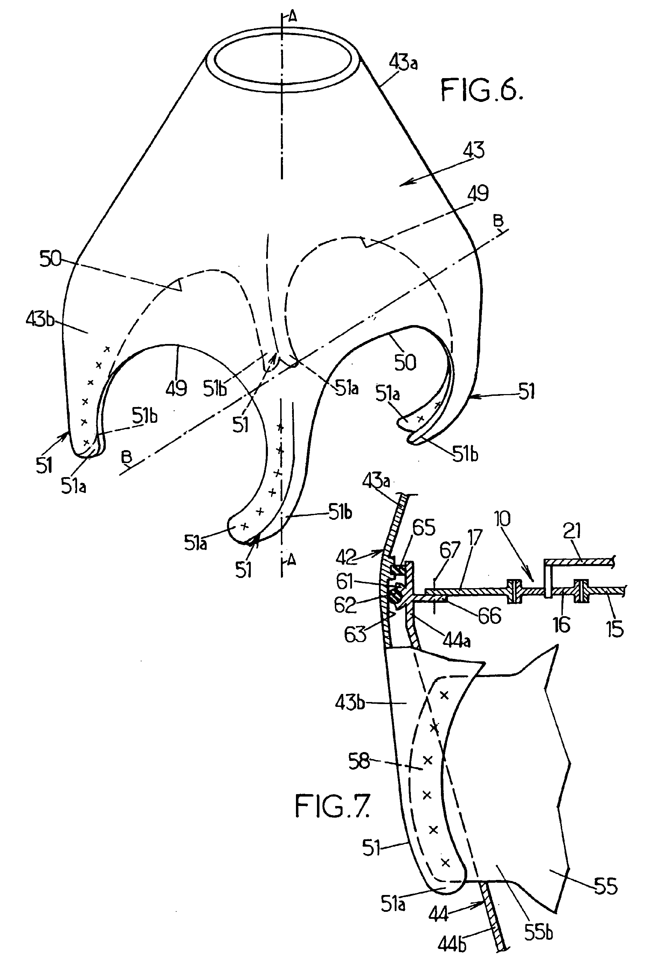

Par contre, dans l'exemple des figures 3 à 7, le haut de carter 43 ne comporte pas seulement une partie 43a convergente vers le rotor, donc du côté opposé au fond de carter 44, et qui est, dans cet exemple, une partie convergente 43a tronconique (voir figure 6), comme dans l'exemple des figures 1 et 2, mais également une jupe 43b, qui prolonge la partie tronconique 43a du haut de carter 43 du côté opposé au rotor et à l'extérieur du fond de carter 44. Comme représenté sur les figures 3, 6 et 7, la jupe 43b, qui prolonge le haut de carter 43 autour du fond de carter 44, présente une forme générale externe convergente du côté opposé au rotor et sensiblement en tronc de pyramide renversé, de section transversale quadrangulaire, sensiblement carrée, à côtés légèrement arrondis et à concavité tournée vers l'axe du haut de carter 43, qui correspond sensiblement à l'axe de rotation A-A. Comme visible sur la figure 6, quatre échancrures sont ménagées chacune dans l'une respectivement des quatre faces de la forme globale en tronc de pyramide de la jupe 43b, deux de ces échancrures, diamétralement opposées par rapport à l'axe A-A, définissant deux portions 49 en arcs cylindriques coaxiaux autour de l'axe de basculement B-B (voir figure 3), et ces échancrures en portions d'arcs cylindriques 49 délimitent dans le bas de la jupe 43b, avec les deux autres échancrures 50 formées dans cette dernière, quatre pieds 51 cintrés et ayant chacun une section transversale sensiblement en cornière à deux ailes sensiblement perpendiculaires l'une à l'autre, dont l'une 51a est une aile sensiblement radiale par rapport à l'axe de basculement B-B, et l'autre 51 b est une aile de rigidification (voir figures 4 et 6).

Ainsi, la jupe 43b du haut de carter 43 présente quatre pieds 51 formant deux paires de pieds, dont les deux pieds 51 de chaque paire sont cintrés l'un en regard de l'autre, et les pieds 51 présentent, sur la face externe (par rapport à l'axe de rotation A-A), de leur aile radiale 51a une portion en arc coaxial autour de l'axe de basculement B-B, délimitant avec la face externe de l'aile 51a du pied 51 cintré en regard une portion de couronne annulaire et sensiblement radiale, par rapport à l'axe de basculement B-B, et coaxiale autour de ce dernier, et qui fait office de face de fixation de la jupe 43b du haut de carter 43 sur une partie pivotante de l'un respectivement de deux paliers de basculement tels que 45, sur la figure 4, entre lesquels et par lesquels le carter 42 de la boîte de transmission de puissance basculante 41 est montée pivotant autour de l'axe de basculement B-B.

Comme pour l'exemple des figures 1 et 2, la figure 4 montre que chaque palier de basculement 45 comprend une partie pivotante 46, qui tourne, autour de l'axe de basculement B-B, sur une partie fixe 47 solidaire d'un support non basculant 48 solidarisé, par exemple par boulonnage, à la structure 52 d'une nacelle motrice de l'aéronef convertible. Chaque partie pivotante 46 comprend un manchon 53 cylindrique de section circulaire, coaxial à l'axe de basculement B-B, et qui tourillonne autour d'un manchon cylindrique coaxial de la partie fixe 47 correspondante du palier 45 correspondant, avec interposition en 54, d'une bague d'usure entre les parties pivotante 46 et fixe 47 lorsque le palier 45 est lisse, ou d'éléments roulants tels que rouleaux ou aiguilles, lorsque le palier 45 et un palier à roulement. Le manchon 53 de la partie pivotante 46 supporte une bride 55 radiale, par rapport à l'axe de basculement B-B, et en saillie vers l'extérieur du manchon 53, pour permettre la fixation de la partie pivotante 46, d'une part, contre la face externe, par rapport à l'axe du haut de carter 43, de l'aile radiale 51a de chacun des deux pieds cintrés 51 en regard l'un de l'autre et du côté du palier 45 correspondant, et, d'autre part, sur la partie tronconique 44b du fond de carter 44.

A cet effet, et comme représenté sur la figure 5, cette partie tronconique 44b du fond de carter 44 présente deux portions de manchons cylindriques 56 de section circulaire, diamétralement opposés et coaxiaux autour de l'axe de basculement B-B, et en saillie radialement vers l'extérieur de la partie tronconique 44b, de sorte que d'une part, le manchon 53 de chaque partie pivotante 46 de palier 45 est engagé (selon l'axe B-B) dans l'une respectivement des portions de manchon 56 du fond de carter 44, et, d'autre part, chaque portion de manchon 56 présente, à son extrémité radiale externe, une surface annulaire plane 57, radiale par rapport à l'axe B-B, et formant une face de fixation du fond de carter 44 à la partie pivotante 46 de l'un respectivement des deux paliers de basculement 45.

Pour faciliter la fixation de chaque partie pivotante 46, d'une part, contre la face annulaire 57 de l'une respectivement des portions de manchons 56 du fond de carter 44, et, d'autre part, contre les ailes radiales 51a des deux pieds 51 correspondants de la jupe 43b du haut de carter 43, et symétriquement de part et d'autre du plan passant par les axes de rotation A-A et de basculement B-B, la bride de fixation 55 de chaque partie pivotante 46 a la forme représentée sur les figures 3, 5 et 7 d'une couronne annulaire centrale 55a de section circulaire, prolongée radialement vers l'extérieur par deux ailes diamétralement opposées 55b, qui s'étendent sur un secteur circulaire suffisamment important pour que chaque aile 55b délimite par superposition avec l'aile 51a correspondante, une surface de fixation 58 (voir figures 3 et 7) en arc de couronne annulaire coaxiale autour de l'axe B-B et d'une taille suffisante.

Ainsi, comme représenté sur les figures 3 et 4, la bride de fixation 55 de la partie pivotante 46 de chaque palier 45 est fixée au fond de carter 44 par sa couronne annulaire centrale 55a, qui est en appui et fixée contre la face annulaire d'extrémité 57 de l'une des portions de manchon 56 du fond de carter 44 par un ensemble d'organes filetés 59 tels que des goujons ou vis, disposés en couronne et orientés parallèlement à l'axe B-B et schématiquement repérés chacun par une croix sur la figure 3 et par son axe sur la figure 4. Radialement à l'extérieur de cette couronne d'organes de fixation 59, la bride de fixation 55 de la partie pivotante 46 de chaque palier 45 est également en appui contre et fixée à l'aile radiale 51a de chacun des deux pieds 51 correspondants du haut de carter 43 par l'une respectivement des deux ailes radiales externes 55b de cette bride 55, à l'aide d'un ensemble d'autres organes de fixation filetés 60, également repérés par des croix sur la figure 3 et par leur axe sur la figure 4, ces organes filetés 60 étant répartis sur la zone 58 précitée en arc de couronne circulaire qui s'étend concentriquement autour de l'axe de basculement B-B et définie par superposition sur l'aile radiale 51a du pied 51 correspondant.

La partie d'extrémité cylindrique 44a du fond de carter 44, qui est la partie de ce fond 44 présentant la plus grande section transversale (perpendiculairement à l'axe A-A) et donc le plus grand diamètre, est entourée d'une gorge annulaire 61, ouverte radialement vers l'extérieur du fond de carter 44 et de section transversale en arc-de-cercle à concavité tournée radialement vers l'extérieur, dans laquelle est monté un joint souple périphérique 62, de forme torique, maintenu en contact par sa périphérie radiale externe, contre une portée annulaire 63 cylindrique, de section transversale circulaire (perpendiculairement à l'axe de rotation A-A et du haut de carter 43), usinée sur la face interne de la partie du haut de carter 43 présentant le plus grand diamètre, à la jonction entre la partie convergente 43a et la jupe 43b.

Le joint souple torique 62, retenu entre la gorge 61 et la portée 63, constitue une liaison rotulée 64, découplant le haut de carter 43 du fond de carter 44 au niveau du maître-couple du carter 42 (perpendiculairement à son axe A-A) en permettant, par sa souplesse et ses déformations limitées, un rotulage limité du haut de carter 43 sur le fond de carter 44, entre lesquels une étanchéité est simultanément assurée par ce joint 62, qui protège l'intérieur du carter 42 de l'infiltration de corps étrangers se glissant entre la jupe 43b et le fond de carter 44.

Cette étanchéité peut être améliorée par la disposition d'un joint d'étanchéité 65 annulaire (voir figures 3 et 7) retenu par sa périphérie radiale externe dans une gorge ménagée dans la paroi interne du haut de carter 43 sur un côté de la portée 63, et dont la périphérie radiale interne est appliquée contre la face externe de la partie d'extrémité cylindrique ouverte 44a du fond de carter 44. Cette partie cylindrique 44a du fond de carter 44 présente également une bride radiale interne et annulaire 66 sur laquelle est fixée la couronne dentée périphérique externe 17 de l'étage réducteur de sortie épicycloïdal 10, par un ensemble d'organes de fixation filetés, tels que goujons ou vis, repérés par leur axe 67, de sorte que cette couronne dentée périphérique 17 est fixée à et enveloppée par cette partie d'extrémité 44a du fond de carter 44 sans être fixée au haut de carter 43.

Ce joint souple périphérique de rotulage 62, représenté sur les figures 3 et 7, permet des déplacements d'amplitude limitée en rotule du haut de carter 43 sur le fond de carter 44, de façon à éviter toute introduction d'efforts ou de moments parasites dans la chaîne de puissance constituée par les étages de pignons et organes dentés logés dans le carter 42. Les efforts tranchants et moments de flexion en provenance du mât rotor 22 transitent par la structure du haut de carter 43, grâce à au moins une butée de roulement guidant le mât 22 dans l'extrémité supérieure du haut de carter 43, comme dans l'exemple des figures 1 et 2, puis ces efforts et moments sont transmis aux parties pivotantes 46 des paliers de basculement 45, et enfin vers le support non-basculant 48 et la structure fixe 52, sans influer sur le fond de carter 44 ni la pignonnerie logée dans le carter 42.

Seul le couple de réaction au couple d'entraînement est transféré au fond de carter 44, en raison de la fixation de la couronne dentée externe 17 de l'étage épicycloïdal 10 sur le seul fond de carter 44. La partie inférieure de la jupe 43b du haut de carter 43, en particulier les quatre pieds 51, de par leur forme, intègrent les fonctions des barres de suspension décrites dans l'exemple des figures 1 et 2. Les efforts venant du mât rotor 22 sont transmis directement vers la structure 52, sans transiter par la pignonnerie logée dans la boîte de transmission 41, ce qui diminue considérablement les déformations des pignons et organes dentés de cet ensemble. L'optimisation des portées des dentures en est d'autant plus facile. La transition des efforts tranchants et moments de flexion entre les pieds 51 du haut de carter 43 et les parties pivotantes 46 des paliers 45 s'effectue par les organes de fixation 60, alors que le haut de carter 43 n'est plus fixé au fond de carter 44 dans la zone de la couronne dentée périphérique fixe 17 de l'étage épicycloïdal 10, et peut au contraire rotuler sur le fond de carter 44 grâce au joint souple périphérique 62, remplissant également une fonction d'étanchéité.

En plus des avantages présentés ci-dessus, le haut de carter 43 de cet exemple de réalisation est plus léger que le haut de carter 3 associé aux barres de suspension et oreilles de fixation de l'exemple des figures 1 et 2. A ce gain en masse, s'ajoute un gain en maintenance.

En variante, dans les deux exemples de réalisation, la partie convergente, telle que 43a sur les figures 3 à 7, du haut de carter 3 ou 43 peut être une partie de carter en forme sensiblement de tronc de pyramide présentant une section transversale, perpendiculairement à l'axe de rotation A-A, qui est sensiblement quadrangulaire, et de préférence sensiblement carrée, à côtés et/ou sommets arrondis et à concavité tournée vers l'axe de rotation A-A.

## Revendications

1. Boîte de transmission de puissance basculante (1, 41), comportant un carter (2, 42) basculant autour d'un axe de basculement (B-B) sur un support non-basculant (8, 48), ledit carter (2, 42) comprenant un fond de carter (4, 44), qui enveloppe au moins un étage (9, 10) de pignons de la boîte de transmission (1, 41), et par lequel ledit carter (2, 42) est monté basculant sur ledit support (8, 48) par deux paliers (5, 45) coaxiaux autour dudit axe de basculement (B-B) et espacés l'un de l'autre le long de ce dernier axe, chaque palier (5, 45) comportant une partie fixe (7, 47), solidaire dudit support (8, 48), et une partie pivotante (6, 46), solidaire dudit fond de carter (4, 44), et montée tourillonnante sur ladite partie fixe (7, 47) correspondante autour dudit axe de basculement (B-B), ledit carter (2, 42) comprenant également un haut de carter (3, 43), assemblé au fond de carter (4, 44), et dans lequel un arbre d'entraînement (22), relié en rotation audit étage (9, 10) de pignons, est monté rotatif autour d'un axe de rotation (A-A) sensiblement perpendiculaire audit axe de basculement (B-B) et basculant avec ledit carter (2, 42) autour dudit axe de basculement (B-B), ledit arbre d'entraînement (22) étant axialement retenu par au moins un palier de butée (27) dans une partie de forme générale externe convergente dudit haut de carter (3, 43), qui converge vers une extrémité dudit arbre d'entraînement (22) en saillie hors dudit carter (2, 42) et liée en rotation à un rotor (25), tel qu'un rotor basculant d'un aéronef convertible,
**caractérisée en ce que** ledit haut de carter (3, 43) coopère avec un agencement (28, 29, 30, 31, 32 ; 51, 60, 55) de transfert audit support (8, 48) d'au moins une charge de traction axiale s'exerçant sur ledit arbre d'entraînement (22), par l'intermédiaire desdits paliers de basculement (5, 45).

2. Boîte de transmission de puissance basculante selon la revendication 1, **caractérisée en ce que** ledit agencement comprend un ensemble d'au moins trois barres de suspension (28) reliant ledit carter basculant (2) aux parties pivotantes (6) desdits deux paliers de basculement (5), les barres de suspension (28) étant rigides, sensiblement rectilignes, inclinées sur ledit axe de rotation (A-A) de sorte à converger les unes vers les autres et vers ledit axe de rotation (A-A) par leurs extrémités tournées vers ledit rotor (25), et réparties autour dudit axe de rotation (A-A), chacune desdites barres de suspension (28) étant articulée, par une première extrémité (29), sur ladite partie convergente du haut de carter (3), et, par sa seconde extrémité (31), sur l'une desdites parties pivotantes (6) desdits paliers (5).

3. Boîte de transmission de puissance basculante selon la revendication 2, **caractérisée en ce que** lesdites barres de suspension (28) s'étendent à l'extérieur dudit carter basculant (2), chacune entre une attache (30) en saillie vers l'extérieur sur ladite partie convergente dudit haut de carter (3), et une attache d'articulation (32) sur la partie pivotante (6) correspondante d'un palier (5).

4. Boîte de transmission de puissance basculante selon l'une des revendications 2 et 3, **caractérisée en ce que** ledit ensemble de barres de suspension comprend quatre barres (28) groupées en deux paires de barres, dont chaque paire a ses deux barres (28) articulées à l'une respectivement des deux parties pivotantes (6) de palier (5), chaque partie pivotante (6) comportant deux oreilles (32) en saillie sensiblement radiales par rapport à l'axe de basculement (B-B) et s'étendant de part et d'autre d'un plan passant par les axes de rotation (A-A) et de basculement (B-B), et sur chacune desdites oreilles (32) s'articule l'une respectivement des deux barres (28) de la paire de barres correspondante.

5. Boîte de transmission de puissance basculante selon la revendication 4, **caractérisée en ce que** les points d'articulation de deux barres de suspension (28) sur une même partie pivotante (6) de palier (5) sont sensiblement diamétralement opposées par rapport audit axe de basculement (B-B).

6. Boîte de transmission de puissance basculante selon l'une quelconque des revendications 2 à 5, **caractérisée en ce que** chaque barre de suspension (28) est articulée au moins à pivotement autour d'un axe perpendiculaire à un plan diamétral passant par ledit axe de rotation (A-A), à chacune de ses deux articulations (29, 31)

7. Boîte de transmission de puissance basculante selon l'une quelconque des revendications 2 à 6, **caractérisée en ce qu**'au moins un étage (10) de pignons de la boîte de transmission (1) est au moins partiellement enveloppé par ledit fond de carter (4) et comporte une couronne dentée (17) externe périphérique, fixée à l'intérieur dudit fond de carter (4) par des éléments de fixation (18), du type goujons filetés, solidarisant le haut (3) et le fond (4) de carter l'un à l'autre.

8. Boîte de transmission de puissance basculante (41), selon la revendication 1, **caractérisée en ce que** ledit agencement comprend une jupe (43b) prolongeant ledit haut de carter (43) du côté opposé au rotor (25) et à l'extérieur dudit fond de carter (44), ladite jupe (43b) présentant au moins deux portions (49) en arcs cylindriques, coaxiaux autour dudit axe de basculement (B-B) et fixées (60) chacune à l'une respectivement des parties pivotantes (46) des paliers (45), ledit haut de carter (43) étant monté sur ledit fond de carter (44) par une liaison rotulée (64) lui permettant de rotuler autour d'une zone (44a) dudit fond de carter (44) définissant son maître couple, perpendiculairement audit axe de rotation (A-A), ledit fond de carter (44) étant également fixé (59) auxdites parties pivotantes (46) des paliers (45).

9. Boîte de transmission de puissance selon la revendication 8, **caractérisée en ce que** ladite liaison rotulée (64) comprend un joint souple périphérique (62), monté dans une gorge annulaire (61) ouverte radialement vers l'extérieur et pratiquée dans ledit fond de carter (44), autour de sa partie (44a) de plus grand diamètre externe, et ledit joint souple (62) est maintenu en contact avec ledit haut de carter (43) contre une portée annulaire (63), cylindrique de section transversale circulaire, perpendiculairement audit axe de rotation (A-A), délimitée, radialement vers l'extérieur du joint souple (62) par rapport audit axe de rotation (A-A), sur la face interne dudit haut de carter (43

10. Boîte de transmission de puissance selon l'une des revendications 8 et 9, **caractérisée en ce que** ladite liaison rotulée (64) assure simultanément sensiblement une étanchéité entre lesdits fond (44) et haut (43) de carter.

11. Boîte de transmission de puissance selon l'une quelconque des revendications 8 à 10, **caractérisée en ce que** ladite jupe (43b) dudit haut de carter (43) comprend quatre portions en arcs cylindriques coaxiaux, formant deux paires de pieds (51) cintrés en regard l'un de l'autre, et tels que pour chaque paire, les deux pieds (51) correspondants sont fixés (60) à ladite partie pivotante (46) de l'un respectivement des deux paliers (45), de part et d'autre d'un plan passant par les axes de rotation (A-A) et de basculement (B-B).

12. Boîte de transmission de puissance selon la revendication 11, **caractérisée en ce que** chaque pied (51) en arc cylindrique est fixé à la partie pivotante (46) correspondante par un ensemble d'organes de fixation (60), répartis le long dudit pied (51) et sur une portion (58) de la périphérie de ladite partie pivotante (46).

13. Boîte de transmission de puissance selon la revendication 12, **caractérisée en ce que** chaque pied (51) en arc cylindrique présente une face de fixation (51a) qui est tournée vers l'extérieur de ladite jupe (43b) et en forme sensiblement de portion de couronne annulaire radiale par rapport à l'axe de basculement (B-B) et coaxiale autour dudit axe de basculement (B-B), et par laquelle ledit pied (51) est fixé par ledit ensemble d'organes de fixation (60), orientés sensiblement selon l'axe de basculement (B-B), sur ladite partie pivotante (46) correspondante.

14. Boîte de transmission de puissance selon l'une quelconque des revendication 12 et 13, **caractérisée en ce que** chaque partie pivotante (46) comprend un manchon (53) tourillonnant autour de la partie fixe (47) correspondante du palier (45) correspondant, et supportant une bride de fixation (55), en saillie radiale vers l'extérieur par rapport à l'axe de basculement (B-B), par laquelle ladite partie pivotante (46) est, d'une part, en appui et fixée par une couronne d'organes de fixation (59), contre l'une respectivement de deux couronnes annulaires (57), délimitées en position diamétralement opposée par rapport à l'axe de rotation (A-A) sur ledit fond de carter (44) et radiales et coaxiales autour de l'axe de basculement (B-B), pour fixer ladite partie pivotante (46) audit fond de carter (44), et, d'autre part, en appui et fixée par chacun de deux ensembles d'organes de fixation (60) contre chacun respectivement des pieds (51) de l'une respectivement desdites paires de pied (51) de ladite jupe (43b), pour fixer ladite partie pivotante (46) audit haut de carter (43), radialement à l'extérieur des organes de fixation (59) audit fond de carter (44).

15. Boîte de transmission de puissance selon l'une quelconque des revendications 8 à 14, **caractérisée en ce que** ledit fond de carter (44) enveloppe une couronne dentée (17) périphérique externe d'un étage (10) de pignons de ladite boîte de transmission (41), et ladite couronne dentée (17) est fixée par un ensemble d'organes de fixation filetés (67) audit fond de carter (44), sans être fixée audit haut de carter (43).

16. Boîte de transmission de puissance selon l'une quelconque des revendications 1 à 15, **caractérisée en ce que** ladite partie convergente (43a) dudit haut de carter (43) est une partie de carter sensiblement tronconique.

17. Boîte de transmission de puissance selon l'une quelconque des revendications 1 à 15, **caractérisée en ce que** ladite partie convergente dudit haut de carter (43) est une partie de carter en forme sensiblement de tronc de pyramide de section transversale, perpendiculairement audit axe de rotation (A-A), sensiblement quadrangulaire à côtés et/ou sommets arrondis à concavité tournée vers ledit axe de rotation (A-A).

18. Aéronef convertible comprenant au moins un rotor basculant (25), mobile entre une première position, dans laquelle ledit au moins un rotor (25) basculant fonctionne comme une hélice d'avion, et une seconde position, dans laquelle ledit au moins un rotor basculant (25) fonctionne comme un rotor principal sustentateur d'hélicoptère, **caractérisé en ce qu**'il comprend au moins une boîte de transmission de puissance basculante selon l'une quelconque des revendications 1 à 17 précédentes pour l'entraînement dudit rotor basculant (25).

## Claims

1. A tilting gearbox (1, 41), including a casing (2, 42) tilting about an axis of tilting (B-B) on a non-tilting support (8, 48), the said casing (2, 42) comprising a casing base (4, 44) which encloses at least one gear stage (9, 10) of the gearbox (1, 41) and through which the said casing (2, 42) is mounted to tilt on the said support (8, 48) by means of two bearings (5, 45) which are coaxial in relation to the said axis of tilting (B-B) and spaced from one another along this latter axis, each bearing (5, 45) including a fixed part (7, 47) which is integrally formed with the said support (8, 48) and a pivotal part (6, 46) which is integrally formed with the said casing base (4, 44) and mounted in the manner of a journal on the said corresponding fixed part (7, 47) about the said axis of tilting (B-B), the said casing (2, 42) also comprising a casing top (3, 43) which is joined to the casing base (4, 44), and in which a drive shaft (22) which is fixed in rotation with the said gear stage (9, 10) is mounted to rotate about an axis of rotation (A-A) substantially perpendicular to the said axis of tilting (B-B) and to tilt with the said casing (2, 42) about the said axis of tilting (B-B), the said drive shaft (22) being axially retained by at least one stop bearing (27) in a part whereof the shape generally converges outwards with respect to the said casing top (3, 43), which converges towards an end of the said drive shaft (22) that projects beyond the said casing (2, 42) and is fixed in rotation with a rotor (25) such as a tilting rotor of a convertible aircraft,
**characterised in that** the said casing top (3, 43) cooperates with an arrangement (28, 29, 30, 31, 32; 51, 60, 55) for transferring to the said support (8, 48) at least one axial traction load exerted on the said drive shaft (22) by way of the said tilt bearings (5, 45).

2. A tilting gearbox according to Claim 1, **characterised in that** the said arrangement comprises a set of at least three suspension rods (28) which connect the said tilting casing (2) to the pivotal parts (6) of the said two tilt bearings (5), the suspension rods (28) being rigid and substantially rectilinear and inclined with respect to the said axis of rotation (A-A) such that they converge towards one another and towards the said axis of rotation (A-A) by means of their ends facing the said rotor (25), and being distributed about the said axis of rotation (A-A), each of the said suspension rods (28) being articulated by means of a first end (29) to the said part converging with respect to the casing top (3) and by means of its second end (31) to one of the said pivotal parts (6) of the said bearings (5).

3. A tilting gearbox according to Claim 2, **characterised in that** the said suspension rods (28) extend outside the said tilting casing (2), in each case between a fixing means (30) projecting outwards on the said part converging towards the said casing top (3), and a fixing means (32) for articulation on the corresponding pivotal part (6) of a bearing (5).

4. A tilting gearbox according to either of Claims 2 and 3, **characterised in that** the said set of suspension rods comprises four rods (28) which are grouped into two pairs of rods, each pair having its two rods (28) articulated to a respective one of the two pivotal parts (6) of the bearings (5), each pivotal part (6) including two lugs (32) which project substantially radially in relation to the axis of tilting (B-B) and extend on either side of a plane passing through the axis of rotation (A-A) and the axis of tilting (B-B), and a respective one of the two rods (28) of the corresponding pair of rods is articulated to each of the said lugs (32).

5. A tilting gearbox according to Claim 4, **characterised in that** the points at which two suspension rods (28) are articulated to a single pivotal part (6) of a bearing (5) are substantially diametrically opposed to the said axis of tilting (B-B).

6. A tilting gearbox according to any one of Claims 2 to 5, **characterised in that** each suspension rod (28) is articulated to each of its two articulations (29, 31) such that it pivots at least about an axis perpendicular to a diametric plane passing through the said axis of rotation (A-A).

7. A tilting gearbox according to any one of Claims 2 to 6, **characterised in that** at least one gear stage (10) of the gearbox (1) is at least partly enclosed by the said casing base (4) and includes a peripheral outer toothed ring (17) which is fixed inside the said casing base (4) by fixing elements (18) of the threaded bolt type which join the top (3) and the base (4) of the casing to one another.

8. A tilting gearbox (41) according to Claim 1, **characterised in that** the said arrangement comprises a skirt (43b) which prolongs the said casing top (43), on the opposite side to that of the rotor (25), outside the said casing base (44), the said skirt (43b) having at least two cylinder arc portions (49) which are coaxial in relation to the said axis of tilting (B-B) and are each fixed (60) to a respective one of the pivotal parts (46) of the bearings (45), the said casing top (43) being mounted on the said casing base (44) by a ball joint (64) allowing it to swivel about a zone (44a) of the said casing base (44) defining its main axis, perpendicular to the said axis of rotation (A-A), the said casing base (44) also being fixed (59) to the said pivotal parts (46) of the bearings (45).

9. A gearbox according to Claim 8, **characterised in that** the said ball joint (64) comprises a peripheral flexible joint (62) which is mounted in a radially outwardly open annular groove (61) made in the said casing base (44) around the part (44a) thereof which has the greatest external diameter, and the said flexible joint (62) is kept in contact with the said casing top (43) against an annular support surface (63) which is cylindrical and is circular in cross-section perpendicular to the said axis of rotation (A-A) and is delimited radially outwardly of the flexible joint (62) in relation to the said axis of rotation (A-A) on the inner face of the said casing top (43

10. A gearbox according to either of Claims 8 and 9, **characterised in that** the said ball joint (64) at the same time ensures a substantially sealed connection between the said casing base (44) and the said casing top (43).

11. A gearbox according to any one of Claims 8 to 10, **characterised in that** the said skirt (43b) of the said casing top (43) comprises four coaxial cylinder arc portions which form two pairs of arced feet (51) opposite one another such that for each pair the two corresponding feet (51) are fixed (60) to the said pivotal part (46) of a respective one of the two bearings (45) on either side of a plane passing through the axis of rotation (A-A) and the axis of tilting (B-B).

12. A gearbox according to Claim 11, **characterised in that** each foot (51) in the shape of a cylinder arc is fixed to the corresponding pivotal part (46) by a set of fixing members (60) which are distributed along the said foot (51) and on a portion (58) of the periphery of the said pivotal part (46).

13. A gearbox according to Claim 12, **characterised in that** each foot (51) in the shape of a cylinder arc has a fixing face (51 a) which is turned outwards of the said skirt (43b) and is substantially in the shape of a radial annular ring portion in relation to the axis of tilting (B-B) and is coaxial in relation to the said axis of tilting (B-B), this fixing face (51 a) enabling the said foot (51) to be fixed by the said set of fixing members (60), which are oriented substantially along the axis of tilting (B-B) on the said corresponding pivotal part (46).

14. A gearbox according to either of Claims 12 and 13, **characterised in that** each pivotal part (46) comprises a sleeve (53) which is pivotal in the manner of a journal about the corresponding fixed part (47) of the corresponding bearing (45), and supports a fixing flange (55) which projects radially outwards in relation to the axis of tilting (B-B), by means of which the said pivotal part (46) on the one hand bears and is fixed by a ring of fixing members (59) against a respective one of two annular rings (57) which are delimited in the diametrically opposed position in relation to the axis of rotation (A-A) on the said casing base (44) and radially and coaxially in relation to the axis of tilting (B-B) in order to fix the said pivotal part (46) to the said casing base (44) and, on the other hand, bears and is fixed by each of two sets of fixing members (60) against in each case one of the feet (51) of a respective one of the said pairs of feet (51) of the said skirt (43b) in order to fix the said pivotal part (46) to the said casing top (43), radially outwardly of the members (59) for fixing to the said casing base (44).

15. A gearbox according to any one of Claims 8 to 14, **characterised in that** the said casing base (44) encloses an outer peripheral toothed ring (17) of a gear stage (10) of the said gearbox (41), and the said toothed ring (17) is fixed by a set of threaded fixing members (67) to the said casing base (44) without being fixed to the said casing top (43).

16. A gearbox according to any one of Claims 1 to 15, **characterised in that** the said converging part (43a) of the said casing top (43) is a substantially frustroconical casing part.

17. A gearbox according to any one of Claims 1 to 15, **characterised in that** the said converging part of the said casing top (43) is a casing part substantially in the shape of a truncated pyramid in cross-section, perpendicular to the said axis of rotation (A-A) and substantially quadrilateral with concavely rounded sides and/or apices turned towards the said axis of rotation (A-A).

18. A convertible aircraft comprising at least one tilting rotor (25) which is movable between a first position, in which the said at least one tilting rotor (25) acts as an aircraft propeller, and a second position in which the said at least one tilting rotor (25) acts as a main lifting rotor of a helicopter, **characterised in that** it comprises at least one tilting gearbox according to any one of the preceding Claims 1 to 17 for driving the said tilting rotor (25).

## Patentansprüche

1. Kippbares Leistungsgetriebe (1, 41) mit einem Gehäuse (2, 42), das um eine Kippachse (B-B) auf einem nicht-kippbaren Träger (8, 48) kippt, wobei das Gehäuse (2, 42) einen Gehäuseboden (4, 44) aufweist, der mindestens eine Stufe (9, 10) von Zahnrädern des Getriebes (1, 41) umhüllt, und über den das Gehäuse (2, 42) kippbar auf den Träger (8, 48) über zwei Lager (5, 45) montiert ist, die um die Kippachse (B-B) koaxial sind und entlang dieser letzteren Achse in Abstand zueinander liegen, wobei jedes Lager (5, 45) einen ortsfesten Bereich (7, 47), der fest mit dem Träger (8, 48) verbunden ist, und einen schwenkbaren Bereich (6, 46) aufweist, der mit dem Gehäuseboden (4, 44) fest verbunden und auf dem entsprechenden ortsfesten Bereich (7, 47) um die Kippachse (B-B) drehend montiert ist, wobei das Gehäuse (2, 42) ebenfalls ein Gehäuseoberteil (3, 43) aufweist, das mit dem Gehäuseboden (4, 44) zusammengebaut ist und in dem eine Antriebswelle (22), die in Drehung mit der Stufe (9, 10) von Zahnrädern verbunden ist, um eine Drehachse (A-A) im Wesentlichen lotrecht zur Kippachse (B-B) drehbar montiert ist und mit dem Gehäuse (2, 42) um die Kippachse (b-B) kippt, wobei die Antriebswelle (22) axial von mindestens einem Anschlaglager (27) in einem Bereich mit allgemein konvergierender äußerer Form des Gehäuseoberteils (3, 43) gehalten wird, der zu einem Ende der Antriebswelle (22) konvergiert, das aus dem Gehäuse (2, 42) vorsteht und in Drehung mit einem Rotor (25), wie einem Kipprotor eines umrüstbaren Luftfahrzeugs, verbunden ist,
**dadurch gekennzeichnet, dass** das Gehäuseoberteil (3, 43) mit einer Anordnung (28, 29, 30, 31, 32 ; 51, 60, 55) zur Übertragung mindestens einer auf die Antriebswelle (22) einwirkenden axialen Zuglast mittels der Kipplager (5, 45) auf den Träger (8, 48) zusammenwirkt.

2. Kippbares Leistungsgetriebe nach Anspruch 1, **dadurch gekennzeichnet, dass** die Anordnung eine Gruppe von mindestens drei Tragstreben (28) aufweist, die das kippbare Gehäuse (2) mit den schwenkbaren Bereichen (6) der zwei Kipplager (5) verbinden, wobei die Tragstreben (28) steif, im Wesentlichen geradlinig, auf die Drehachse (A-A) geneigt sind, um zueinander und zur Drehachse (A-A) über ihre zum Rotor (25) weisenden Enden zu konvergieren, und um die Drehachse (A-A) verteilt sind, wobei jede der Tragstreben (28) mit einem ersten Ende (29) an den konvergierenden Bereich des Gehäuseoberteils (3) und mit ihrem zweiten Ende (31) an einen der schwenkbaren Bereiche (6) der Lager (5) angelenkt ist.

3. Kippbares Leistungsgetriebe nach Anspruch 2, **dadurch gekennzeichnet, dass** die Tragstreben (28) sich außerhalb des kippbaren Gehäuses (2), jede zwischen einem nach außen auf dem konvergierenden Bereich des Gehäuseoberteils (3) vorstehenden Befestigungsbeschlag (30) und einem Gelenkbefestigungsbeschlag (32) auf dem entsprechenden schwenkbaren Bereich (6) eines Lagers (5) erstrecken.

4. Kippbares Leistungsgetriebe nach einem der Ansprüche 2 und 3, **dadurch gekennzeichnet, dass** die Gruppe von Tragstreben vier Streben (28) aufweist, die in zwei Paaren von Streben gruppiert sind, von denen jedes Paar seine zwei Streben (28) an einem der zwei schwenkbaren Bereiche (6) des Lagers (5) angelenkt hat, wobei jeder schwenkbare Bereich (6) zwei Lappen (32) aufweist, die bezüglich der Kippachse (B-B) im Wesentlichen radial vorstehen und sich zu beiden Seiten einer Ebene erstrecken, die durch die Drehachse (A-A) und die Kippachse (B-B) verläuft, und dass an jeden der Lappen (32) eine der zwei Streben (28) des entsprechenden Paars von Streben angelenkt ist.

5. Kippbares Leistungsgetriebe nach Anspruch 4, **dadurch gekennzeichnet, dass** die Gelenkpunkte von zwei Tragstreben (28) an dem gleichen schwenkbaren Bereich (6) eines Lagers (5) bezüglich der Kippachse (B-B) im Wesentlichen diametral entgegengesetzt sind.

6. Kippbares Leistungsgetriebe nach einem der Ansprüche 2 bis 5, **dadurch gekennzeichnet, dass** jede Tragstrebe (28) an jedem ihrer beiden Enden (29, 31) mindestens um eine Achse lotrecht zu einer diametralen Ebene, die durch die Drehachse (A-A) verläuft, schwenkbar angelenkt ist.

7. Kippbares Leistungsgetriebe nach einem der Ansprüche 2 bis 6, **dadurch gekennzeichnet, dass** mindestens eine Stufe (10) von Zahnrädern des Getriebes (1) mindestens teilweise vom Gehäuseboden (4) umhüllt wird und einen äußeren peripheren Zahnkranz (17) aufweist, der innerhalb des Gehäusebodens (4) von Befestigungselementen (18) vom Typ Gewindebolzen befestigt wird, die das Oberteil (3) und der Boden (4) des Gehäuses fest miteinander verbinden.

8. Kippbares Leistungsgetriebe (41) nach Anspruch 1, **dadurch gekennzeichnet, dass** die Anordnung eine Schürze (43b) aufweist, die das Gehäuseoberteil (43) auf der dem Rotor (25) gegenüberliegenden Seite und außerhalb des Gehäusebodens (44) verlängert, wobei die Schürze (43b) mindestens zwei koaxiale zylinderbogenförmige Abschnitte (49) um die Kippachse (B-B) herum und je an einem der schwenkbaren Bereiche (46) der Lager (45) befestigt (60) aufweist, wobei das Gehäuseoberteil (43) auf den Gehäuseboden (44) durch eine Kugelgelenkverbindung (64) montiert ist, die es ihm ermöglicht, sich um eine Zone (44a) des Gehäusebodens (44) nach Art eines Kugelgelenks zu bewegen, die seinen Hauptspant definiert, lotrecht zur Drehachse (A-A), wobei der Gehäuseboden (44) ebenfalls an den schwenkbaren Bereichen (46) der Lager (45) befestigt ist (59).

9. Leistungsgetriebe nach Anspruch 8, **dadurch gekennzeichnet, dass** die Kugelgelenkverbindung (64) eine flexible Umfangsdichtung (62) aufweist, die in eine Ringkehle (61) montiert ist, die radial nach außen offen und in dem Gehäuseboden (44) um seinen Bereich (44a) mit größtem Außendurchmesser ausgespart ist, und die flexible Dichtung (62) mit dem Gehäuseoberteil (43) gegen ein zylindrisches ringförmiges Auflager (63) mit kreisförmigem Querschnitt lotrecht zur Drehachse (A-A) in Kontakt gehalten wird, das radial nach außerhalb der flexiblen Dichtung (62) bezüglich der Drehachse (A-A), auf der Innenseite des Gehäuseoberteils (43) begrenzt wird.

10. Leistungsgetriebe nach einem der Ansprüche 8 und 9, **dadurch gekennzeichnet, dass** die Kugelgelenkverbindung (64) gleichzeitig im Wesentlichen eine Dichtheit zwischen dem Boden (44) und dem Oberteil (43) des Gehäuses gewährleistet.

11. Leistungsgetriebe nach einem der Ansprüche 8 bis 10, **dadurch gekennzeichnet, dass** die Schürze (43b) des Gehäuseoberteils (43) vier koaxiale zylinderbogenförmige Abschnitte aufweist, die zwei einander gegenüber liegende Paare von gebogenen Füßen (51) bilden, die derart sind, dass für jedes Paar die zwei entsprechenden Füße (51) am schwenkbaren Teil (46) eines der zwei Lager (45) zu beiden Seiten einer Ebene befestigt sind (60), die durch die Drehachse (A-A) und die Kippachse (B-B) geht.

12. Leistungsgetriebe nach Anspruch 11, **dadurch gekennzeichnet, dass** jeder zylinderbogenförmige Fuß (51) am entsprechenden schwenkbaren Bereich (46) durch eine Gruppe von Befestigungsorganen (60) befestigt ist, die entlang des Fußes (51) und über einen Abschnitt (58) des Umfangs des schwenkbaren Bereichs (46) verteilt sind.

13. Leistungsgetriebe nach Anspruch 12, **dadurch gekennzeichnet, dass** jeder zylinderbogenförmige Fuß (51) eine Befestigungsseite (51a) hat, die zur Außenseite der Schürze (43b) weist und eine Form im Wesentlichen eines radialen ringförmigen Kranzabschnitts bezüglich der Kippachse (B-B) und koaxial um die Kippachse (B-B) hat, und über die der Fuß (51) durch die Gruppe von Befestigungsorganen (60) befestigt wird, die im Wesentlichen gemäß der Kippachse (B-B) auf dem entsprechenden schwenkbaren Bereich (46) ausgerichtet sind.

14. Leistungsgetriebe nach einem der Ansprüche 12 und 13, **dadurch gekennzeichnet, dass** jeder schwenkbare Bereich (46) eine Muffe (53) aufweist, die um den entsprechenden ortsfesten Bereich (47) des entsprechenden Lagers (45) dreht, und einen Befestigungsflansch (55) trägt, der bezüglich der Kippachse (B-B) radial nach außen vorsteht, durch den der schwenkbare Bereich (46) einerseits gegen einen von zwei ringförmigen Kränzen (57) in Auflage und durch einen Kranz von Befestigungsorganen (59) an diesem befestigt ist, die in einer Stellung diametral entgegengesetzt zur Drehachse (A-A) auf dem Gehäuseboden (44) und radial und koaxial um die Kippachse (B-B) begrenzt sind, um den schwenkbaren Bereich (46) am Gehäuseboden (44) zu befestigen, und andererseits gegen jeden der Füße (51) eines der Paare von Füßen (51) der Schürze (43b) in Auflage und durch jede von zwei Gruppen von Befestigungsorganen (60) an diesem befestigt ist, um den schwenkbaren Bereich (46) am Gehäuseoberteil (43) radial außerhalb der Befestigungsorgane (59) am Gehäuseboden (44) zu befestigen.

15. Leistungsgetriebe nach einem der Ansprüche 8 bis 14, **dadurch gekennzeichnet, dass** der Gehäuseboden (44) einen äußeren peripheren Zahnkranz (17) einer Stufe (10) von Zahnrädern des Getriebes (41) umhüllt, und der Zahnkranz (17) von einer Gruppe von Gewindebefestigungsorganen (67) am Gehäuseboden (44) befestigt wird, ohne am Gehäuseoberteil (43) befestigt zu sein.

16. Leistungsgetriebe nach einem der Ansprüche 1 bis 15, **dadurch gekennzeichnet, dass** der konvergierende Bereich (43a) des Gehäuseoberteils (43) ein im Wesentlichen kegelstumpfförmiger Gehäusebereich ist.

17. Leistungsgetriebe nach einem der Ansprüche 1 bis 15, **dadurch gekennzeichnet, dass** der konvergierende Bereich des Gehäuseoberteils (43) ein Gehäusebereich in Form eines Pyramidenstumpfs mit einem Querschnitt, lotrecht zur Drehachse (A-A), im Wesentlichen viereckig mit abgerundeten Seiten und/oder Spitzen, mit zur Drehachse (A-A) weisender Konkavität ist.

18. Umrüstbares Luftfahrzeug, das mindestens einen Kipprotor (25) aufweist, der zwischen einer ersten Stellung, in der der mindestens eine Kipprotor (25) wie ein Flugzeugpropeller arbeitet, und einer zweiten Stellung, in der der mindestens eine Kipprotor (25) wie ein Haupthubrotor eines Hubschraubers arbeitet, beweglich ist, **dadurch gekennzeichnet, dass** es mindestens ein kippbares Leistungsgetriebe nach einem der vorhergehenden Ansprüche 1 bis 17 für den Antrieb des Kipprotors (25) aufweist.
